# EUROPEAN PATENT SPECIFICATION

(11) **EP 3 547 125 B1**
(45) Date of publication and mention of the grant of the patent: **07.09.2022**
(21) Application number: 18164183.8
(22) Date of filing: 27.03.2018
(51) Int. Cl.: G06F 9/48

(54) **METHODS OF CONFIGURING AN AUTOMATION SYSTEM**
VERFAHREN ZUR KONFIGURATION EINES AUTOMATIONSSYSTEMS
PROCÉDÉS DE CONFIGURATION D'UN SYSTÈME D'AUTOMATISATION

(43) Date of publication of application: 02.10.2019
(73) Proprietor: Siemens Aktiengesellschaft, 80333 München (DE)
(72) Inventor: Richter, Jan, 91207 Lauf a. d. Pegnitz (DE); Botero Halblaub, Andrés, 85614 Kirchseeon (DE)

(56) References cited:
- US-A1- 2009 319 458
- US-A1- 2016 099 863

## Description

The present disclosure relates to methods, apparatuses and computer programs as well as computer program products for configuring an automation system.

Automation systems such as process automation systems, building automation systems, control automation systems, industrial automation systems and/or embedded systems, in particular multi-core systems, are used to collect data and/or process data. Such data may be used for monitoring and/or controlling one or more components of the automation system, e.g. one or more devices of the automation system. Further applications of automation systems may comprise the automobile industry or the aerospace industry as will be described in more detail below.

Designing an automation system may require input from several areas. At a minimum, a process engineer and a control engineer must coordinate their efforts to obtain a workable automation system, comprising e.g. a control system. Most tools used to develop automation systems today are programming tools that are used by application software specialists. A problem associated with such an approach is that process engineers find it difficult to utilize the application software and to determine if it matches their needs. Also, the process engineers usually have to develop requirement specifications for the application software specialist because the application software specialist does not identify with a process requirement that defines Standard Operating Procedures (SOPs), nor is the software specialist familiar with e.g. Pipe work and Instrument Drawings (P&IDs).

Typically, the process engineer designs a process for the control of the automation system. The control engineer works from the process design to create an application for the automation system. However, because the process and control engineer have a different perspective of the automation system, the final output, i.e., application, of the control engineer does not necessarily correlate to the process initially designed by the process engineer. Augmenting this inherent problem is the implementation of two programming environments for control and human-machine interface. Thus, the programming tools used for each area may not include aspects of the other's area. Furthermore, design tools implemented by process and control engineers do not necessarily cooperate well with each other.

Inefficiency may also result because the respective data bases of the process and control domain areas are not integrated. Information is scattered in different files and tools. A data entry is often duplicated because of the non-integrated databases. A large amount of trouble shooting is further required by those individuals involved with creating the automated control system. To this end patent publication US 6643555 B1 proposes a tool capable of designing an automation system that simultaneously incorporates the control and HMI aspects of a process control system.

From patent application publication WO 2016195690 A1 generating programmable logic controller (PLC) code based on a connectivity model in a multidisciplinary engineering system has become known. The connectivity model provides interfaces and connections between various aspects of the multidisciplinary engineering system to provide engineering data, code scripts, executables, calls and other information that is used to generate PLC code. Code generation rules are employed utilizing the engineering data, code scripts, executables, calls and other information received using the connectivity model to generate PLC code. Thus, bridging disciplines is one of the great challenges in automation systems engineering.

US patent application publication US 2009319458 A1 discloses to input a directed dependency graph represented in code form into a scheduler, wherein nodes are messages and edges go from data sources to targets.

US patent application publication US 2016099863 discloses a distributed control system, DCS, that can be graphically modeled with nodes and directed edges, wherein a node represents either a type of DCS component or a signal of a DCS components, and wherein an edge is an "influence"-edge, or a "contains"-edge.

It is an object of the present disclosure to ensure that an automation system is set up properly and that in particular operating process algorithms' executable functions are executed in appropriate order and/or with appropriate timing.

The invention is set out in the appended set of claims.

Examples of embodiments herein will be described in more detail with reference to attached drawings in which:
Figure 1 illustrates an example of a multidisciplinary engineering system.
Figure 2 illustrates an exemplary factor graph.
Figure 3 illustrates an exemplary "equals node".
Figure 4 illustrates an example for message passing in a cycle-free factor graph model.
Figure 4a illustrates an example of automation system.
Figure 4b illustrates another example of automation system.
Figure 5 illustrates two independent airspeed measurements by message passing on factor graph model.
Figure 6 illustrates an example of an enriched factor graph model.
Figure 7 illustrates an exemplary factor graph model and a spanning tree of said factor graph.
Figure 8 illustrates an example of a cyclic factor graph model.
Figures 9 and 10 illustrate further examples of cyclic factor graphs.
Figure 11 illustrates an example with Process Deadlines and Runnable Sequencing Constraints.
Figure 12 illustrates an example of a communication matrix.
Figure 13 illustrates another exemplary embodiment of a factor graph model.
Figure 14 illustrates another example of a communication matrix.
Figure 15 illustrates still another cyclic factor graph model.
Figure 16 illustrates exemplary steps of a first embodiment of determining an execution schedule.
Figure 17 illustrates exemplary steps of a second embodiment of determining an execution schedule.
Figure 18 illustrates exemplary steps of a third embodiment of determining an execution schedule.
Figure 19 illustrates exemplary steps of a fourth embodiment of determining an execution schedule.
Figure 20 illustrates exemplary steps of a fifth embodiment of determining an execution schedule.
Figure 21 illustrates exemplary steps of a sixth embodiment of determining an execution schedule.
Figure 22 illustrates exemplary steps of a first embodiment of determining a message schedule.
Figure 23 illustrates exemplary steps of a second embodiment of determining a message schedule.
Figure 24 illustrates exemplary steps of a third embodiment of determining a message schedule.
Figure 25 illustrates exemplary steps of a fourth embodiment of determining a message schedule.
Figure 26 illustrates exemplary steps of a sixth embodiment of determining a message schedule.
Figure 27 illustrates exemplary steps of a seventh embodiment of determining a message schedule.
Figure 28 illustrates exemplary steps of an eighth embodiment of determining a message schedule.

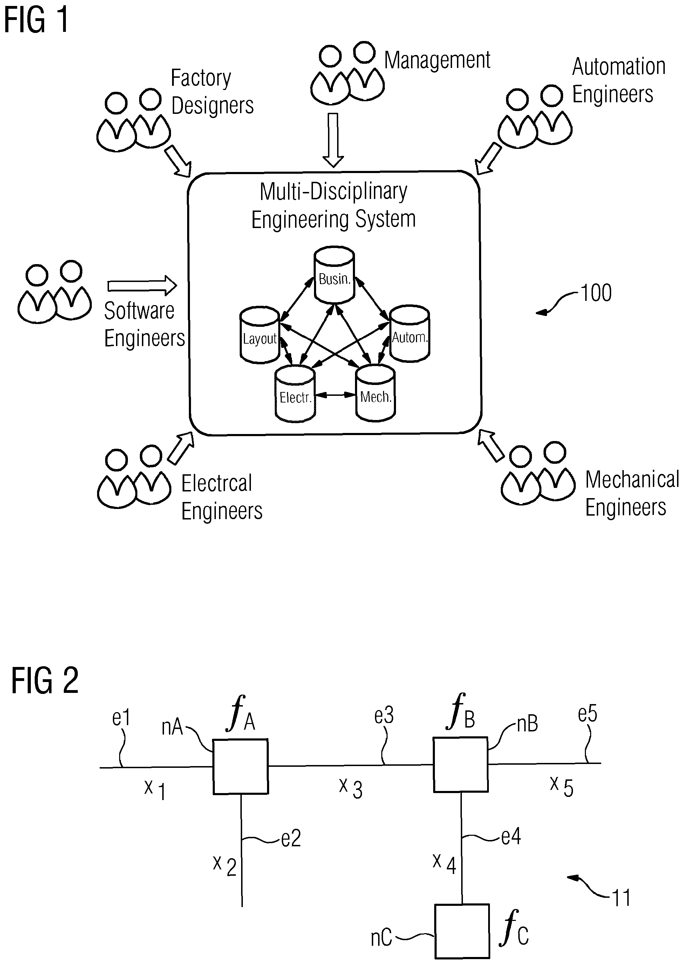

The design of a system, for example an embedded (software) system, comprises several interconnected steps involving experts from different domains. Exemplary input from one or more experts is depicted in Figure 1 where input in a multi-disciplinary engineering system 100 may be provided by factory designers, management, automation engineers, mechanical engineers, electrical engineers and/or software engineers.

At first, a conceptual design of algorithms for signal processing, estimation, and/or control may be determined. This concept may describe the operating process of an automation system. An automation system may thus comprise one or more embedded (software) systems. In this conceptual phase, the principles of operation are derived, such as the list of needed signals, the type and structure of processing algorithm, and its parameterization for adequate operation with the physical automation system at hand. This phase may be conducted in a model-based design and/or engineering tool such as The MathWorks' Matlab/Simulink or Esterel's ANSYS SCADE Suite.

After the concept design has been determined in the conceptual phase, one or more algorithms may be handed over to one or more software engineers who may split up the algorithm into one or more software components, e.g., executable/runnable functions, distribute them over one or more computing nodes, such as embedded computing nodes (ECUs) of the embedded software system, link the runnables, i.e. runnable function entities, or other software components to the tasks of one or more operating systems. A software component may thus comprise one or more runnables. A software engineer may also design one or more execution schedules for the one or more executable functions and the communication between the computing nodes of the automation system, e.g. computing nodes of an embedded system. The communication between computing nodes may be governed by a message schedule. Thus the automation system may comprise a communication network having one or more computing nodes. It should be understood that the terms executable and runnable are used interchangeably throughout the present disclosure. As one or more embedded systems may be part of the automation system it should be understood that the operating system, which schedules communication between the one or more computing nodes, may also part of the automation system. Thus, the operating process of the automation system is at least in part, or preferably fully, determined by the executable functions.

The execution schedule design governing execution of one or more executable functions of one or more computing nodes may be supported by schedule optimization tools, such as Timing Architects' TA Suite; similar tools, such as Mentor Graphics VSA COM Designer, exist for optimizing the communication design for communication system, e.g. one or more bus systems. The interaction between discipline specialists in the concept phase and the software engineering phase is problematic as these groups may use different technical terminology, different models, and different tools. Proper communication between algorithm designers (signal processing and control engineers) and software engineers is, however, vital for ensuring that the algorithms' runnables are executed in an appropriate order and/or with an appropriate timing, when deployed. A neglect in that area may lead to deployment defects that need to be detected and debugged during verification actions. Avoiding these defects upfront promises considerable cost savings.

Mathworks' Simulink Embedded Coder allows an algorithm engineer to annotate models with deployment-relevant detailed information prior to code generation. For the control and signal processing engineers, however, the offered annotations are much too detailed, and out of their domain of knowledge. If the deployment configuration is later changed by a software engineer, and it typically is changed, then these changes are not synchronized, e.g., not played back to Simulink.

Thus, a multi-role and/or multi-phase engineering tool 100, e.g., covering the algorithm design phase and the software engineering phase is needed. Such an engineering tool 100 may work on a single model that is enriched over time, and preferably having tailored views, by discipline experts. SIEMENS Imagine.Lab Embedded Software Designer is a tool following this philosophy. Hence, it is proposed that algorithm concept designers can capture the essential deployment constraints regarding scheduling and communication design in the algorithm model in a natural way that is native to their thinking and language. These constraints drive the detailed schedule design and communication design, executed by software engineers. To this end, the use of factor graphs, which are a unified graphical notation for a wide variety of signal processing, estimation, and control algorithms is proposed. Factor graphs may support the design of algorithm concepts, and may capture the constraints for scheduling the parts of an algorithm on one or more computing nodes. This allows the extension and annotation of further details to ensure consistency in the design and software engineering domains.

Figure 1 illustrates an example of a multi-disciplinary engineering system. The multidisciplinary engineering system 100 may include one or more servers and workstations. The one or more servers and/or workstations in the multidisciplinary engineering system 100 may include one or more engineering applications for various engineering disciplines, e.g. the applications and/or the functions of the applications named in the above. The one or more engineering applications may thus be directed to layout design, electrical design, mechanical design, automation design, business functions and/or software design. The one or more engineering applications correspond to engineering disciplines, such as one or more of any one of the following factory design, electrical engineering, mechanical engineering, automation engineering, software engineering and/or project management. Engineered devices and other objects may be represented in the engineering applications in the multidisciplinary system, such as a conveyor on a factory assembly line. Each engineering application may present data differently, in a manner suited for the specific engineering discipline. Additionally, different or fewer engineering applications and engineering disciplines may be provided. Alternatively, at least one of the engineering applications is directed to two or more engineering disciplines within a single application. Various engineers, designers, technicians, managers and other users may access the one or more engineering applications to complete tasks on the project. For example, in the context of an automobile factory, various engineers, designers and project managers may plan a new production line or part thereof for a car door assembly. Finally, the engineering tool may comprise an application, view and/or phase for a software engineer in order to input his domain specific knowledge, cf. above.

Now factor graphs will be explained in more detail. A factor graph is a graphical representation of a factorized function. A description of factor graphs is provided in Loelinger et al. - The Factor Graph Approach to Model-Based Signal Processing, Vol. 95, No. 6, June 2007, Proceedings of the IEEE. In accordance with standard notation, random variables are denoted by capital letters (X) and observations of random variables by small letters (x). Vectors and matrices are printed in bold typeface (***x**, **A***)*.* An exemplary embodiment of a factor graph is thus shown in Figure 2, where the function (*x*₁, *x*₂, *x*₃, *x*₄, *x*₅) = *f_{A}* (*x*₁, *x*₂, *x*₃) *f_{B}* (*x*₃, *x*₄, *x*₅)·*f_{C}*(*x*₄) that consists of three factors is represented by the graph shown in Figure 2. Hence, a factor graph may already be understood to be a factor graph model 11.

Factor graphs may thus be constructed according to the following base rules: a node nA, nB, nC for each factor f_{A}, f_{B}, f_{C} an edge or half-edge e1, e2, e3, e4, e5 for each variable x1, x2, x3, x4, x5, a node nA, nB, nC is connected to edge e1, e2, e3, e4, e5 if variable x1, x2, x3, x4, x5 appears in factor f_{A}, f_{B}, f_{C}. A half-edge occurs for variables that appear in only one factor. Factor graphs may have cycles, although the exemplary factor graph in Figure 2 is cycle-free. Since a given function generally has multiple factorizations, this results in multiple possible factor graphs.

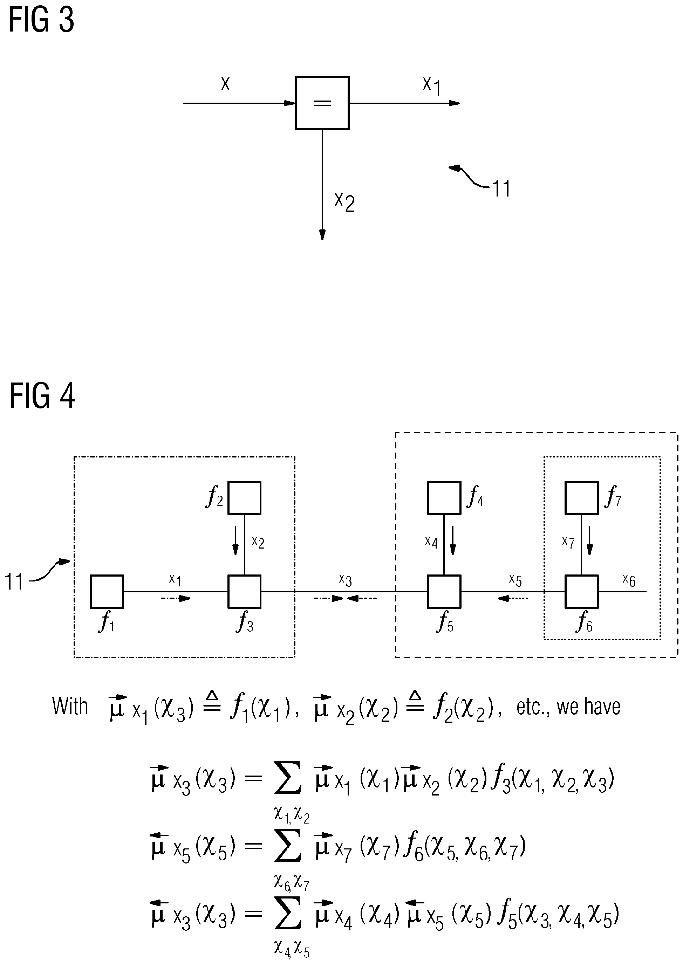

It is a convention that every variable should appear on exactly one edge. Although a variable can appear in an arbitrary number of factors, this rule can be enforced by "cloning" variables using a so called "equals node". For example, the variable *x* can be cloned into *x*₁ = *x* and *x*₂ = x. The equals node is shown in Figure 3. Note that the equals node is fully consistent with the factor graph framework, since it represents the factor *f*= (*x*, *x*₁ , *x*₂) = *δ*(*x* - *x*₁ )*δ*(*x* -*x*₂), where *δ* is the Dirac impulse function for continuous signals and the Kronecker delta function for discrete signals.

Apart from simple algebraic function evaluation, factor graphs may be applicable to represent algorithms in the following application fields: Signal estimation and filtering (Kalman filters, particle filters, sensor fusion, ...), Probabilistic reasoning (Bayes networks, Markov chains, ...), Error-correcting codes (Turbo codes, ...), Machine learning (neural / deep learning network training, ...), Optimal control (linear quadratic regulation, ...).

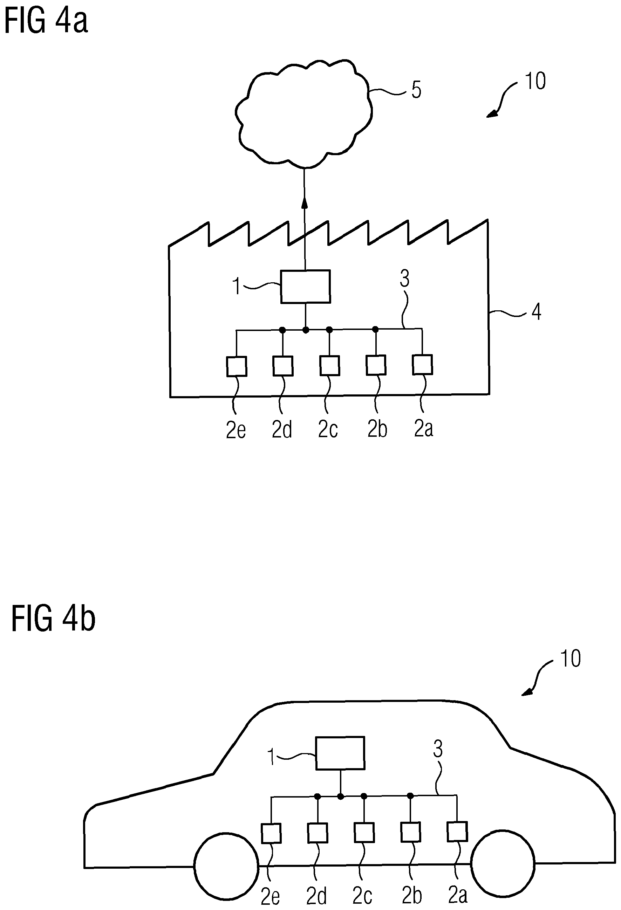

Factor graphs are compatible with hierarchical modeling methods in the sense that sub-graphs may be grouped, that is, put into boxes, as e.g. shown in Figure 4, where sub-graphs are depicted by dashed lines, and be considered as a lager actor or node, also denoted as super-node. Thus, hierarchical modeling may provide different levels of abstraction. For example, a super-node may be (fully) characterized by its outgoing messages. Furthermore, hierarchical modeling may be used to build libraries of common functionality. Hierarchical modeling may also aid in the understanding of an algorithm. Still further, hierarchical modeling may be used as the basis for allocation of software components, such as executable functions or runnables functions, and/or the distribution of software components, such as executable functions or runnables, over several computing nodes, as elaborated throughout the present disclosure.

While a factor graph represents the structure of a function, it may not prescribe how to do computations. Messages running along the edges of the factor graph define how information is passed through the factor graphs. Message schedules may thus define the order of message processing. Message passing rules in nodes may define how messages run through nodes, e.g. in the case of a super-node. The computations in the nodes may be easy or complex, depending on the nature of the executable functions. Figure 4 shows an example for message passing in a cycle-free factor graph. The dashed lines in Figure 4 may represent one or more software components that comprise one or more executable functions, e.g., a first software component may comprise executable functions f1, f2 and f3. One or more software components may then be assigned to a computing node, wherein the computing node may coincide with the dashed line in Figure 4.

Hence, it is further proposed to determine a factor graph model of an operating process by e.g. assigning one or more resources of the automation system, such as one or more computing nodes, and/or one or more executable functions to one or more nodes of a factor graph model. Furthermore, one or more variables may be assigned to one or more edges or half-edge of a factor graph. Preferably the complete operating process or part of an operating process of an automation system may be represented by a factor graph model. The operating process may e.g. be input and/or modeled by way of a multi-disciplinary engineering tool.

In automation systems, such as, for example, shown in Figure 4a, components 2a, 2b, 2c, 2d, 2e, 3, 1, 5 such as, for example, field devices are used, which serve for detecting and/or influencing process variables. For measuring process variables, it is possible, for example, to use measuring devices, such as fill level measuring devices, flowmeters, pressure and temperature measuring devices, pH measuring devices, conductivity meters, etc., which record the corresponding process variables level, flow, pressure, temperature, pH or conductivity. Actuators may be used to influence the process variables, such as valves or pumps via which e.g. the flow of a liquid in a pipeline or the level of a medium in a container is changed. Under the term automation component all types of measuring devices and actuators may be subsumed. In addition, all devices that are used close to the process and that supply or process process-relevant information are referred to as automation components. In addition to the aforementioned measuring devices/sensors and/or actuators, automation components are also generally referred to as those units which are connected directly to a communication network 3, e.g. bus, such as a field bus, and serve to communicate with a superordinate unit 1, such as a remote I/Os, gateways, linking devices and wireless adapters or radio adapters, PLCs etc. Depending on the size of the automation system, also referred to as plant, one or more controllers PLC A, PLC B, not shown, can be arranged at the field level. The communication between the controllers PLC A, PLC B and the components which are coupled to one of the controllers PLC A, PLC B, may occur via at least one of the communication network 3. At the control level, the controllers PLC A, PLC B supply their data collected by the components, such as measured values, and/or further processed measured values to a higher-level control unit, e.g. a SCADA. The components of the automation system 10 are designed, for example, network-capable and connected to each other via a communication network 3. Each component can be assigned a unique address in the network. The communication can be by means of a network protocol. Thus, in the present case, a controller is also understood as a component. Furthermore, one or more automation components may also be purely software-based, for example in the form of a so-called agent.

Furthermore the automation system may be connected to a Cloud-infrastructure 5. The Cloud-infrastructure 5 may comprise one or more server, one or more platforms and/or one or more applications, that is, computer programs running on one or more of the platforms. The Cloud-infrastructure may e.g. be the so called MindSphere platform of SIEMENS. The cloud infrastructure may thus be realized by one or more processing units, which preferably provide one or more services. The one or more services may be retrieved e.g. via one or more application programming interfaces, APIs.

The cloud-infrastructure 5 may thus be communicatively coupled to the automation system or may even be considered part of the automation system, as one or more control and/or diagnostic functions are carried out by the one or more services of the cloud-infrastructure 5. Thus, the operating process of the automation system may at least in part be carried out by way of the cloud-infrastructure 5.

A further embodiment of an automation system 10 is shown in Figure 4b, where a vehicle having multiple automation components 2a, 2b, 2c, 2d, 2e, 3, 1, as e.g. sensors and/or data processing units is depicted. For example, said vehicle may comprise one or more computing nodes, such as embedded computing nodes (ECUs), as described in the above. In particular, the vehicle may be an autonomous car. In this case a sensor may be, e.g., a LiDAR sensor or an exhaust oxygen sensor. Thus, in particular in this context, an automation component may be understood to comprise any component for determining and/or processing data and or signals, e.g. representing one or more physical entities, in an automation system 10, such as a vehicle or an aircraft.

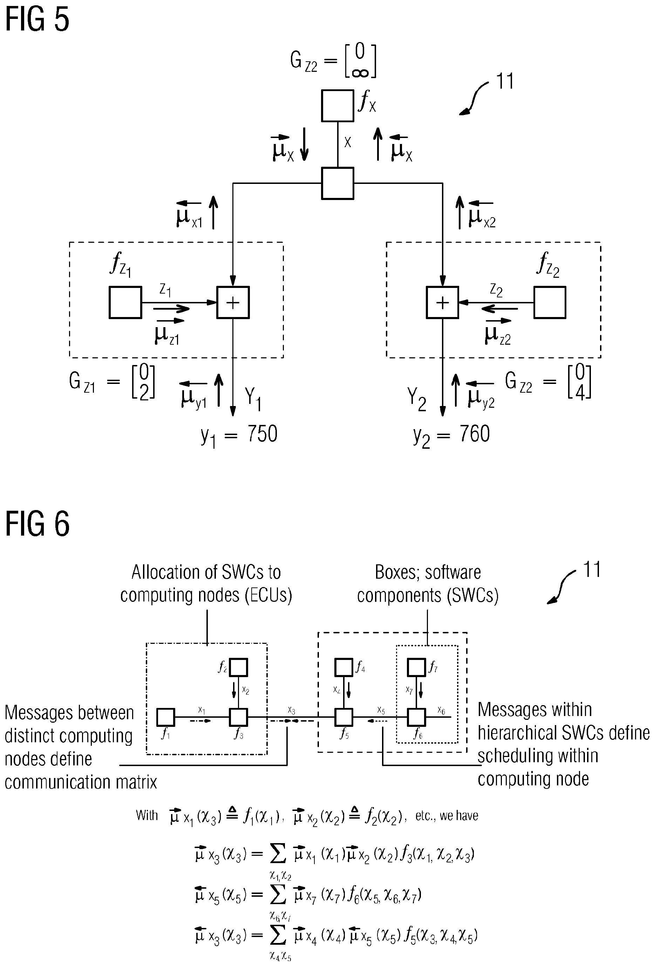

Figure 5 shows an exemplary embodiment of an application of a factor graph model 11 for automation system, in this case a speed measurement system of an aircraft. True airspeed in knots (kts, 1 kts = 1 nautical mile/h) is measured by integrating the signals from multiple Pitot tubes into a single value. Accurate airspeed information is vital for safe flight, since without knowledge of airspeed an aircraft might stall.

The measurement outputs from two Pitot tubes shall be integrated into a single value. The transducer electronics of a measurement equipment in an aircraft are often based on different principles or come from different vendors to enhance the diversity. Consequently, the two sensors may have different tolerances, reflected as additive Gaussian noise signals with zero mean and different variances. For example, PITOT1 may have a variance *z*₁ = 2 *kts* and PITOT2 may have a variance of *z*₂ = 4 *kts.* If PITOT1 then measures the value *y*₁ = 750*kts*, whereas PITOT2 measures the value *y*₂ = 760*kts* then the most likely value for the aircraft's true air speed ***X*** shall be determined. This fusion problem is solved using Gaussian message arithmetic as represented in Figure 5.

The plus-nodes add the Gaussian distributions for the noises *zi* to the measurements according to the data carried by incoming messages **µ**_{y1}, **µ**_{z1} and **µ**_{y2}, **µ**_{z2}, respectively. The plus-nodes produce the outgoing messages **µ***ₓ*. In Gaussian distributions, this addition is easy in terms of computational effort, since Gaussian distributions have finite representations, for example by mean and variance. All operations on that graph are linear, so the Gaussian property is preserved. The equals-node is the most interesting one: it has to integrate two Gaussian distributions carried by messages **µ**_{*x*1} and **µ***x*₂, and thus does the main job in the sensor fusion task. The algorithm for Gaussian message passing in the plus-node calculates the resulting mean-value from a weighed sum of the incoming mean-values, where the incoming weights are the inverse incoming variances. The outgoing variance is obtained as the inverse of the incoming weights' sum. Finally, the two messages with opposite direction on the edge labeled ***X*** are noteworthy. In the example of Figure 5, the message **µ***ₓ* coming from the equals-node is combined with prior knowledge about the variable ***X*** expressed in the message **µ***ₓ*, carrying the distribution expressed in ***f**x.* In this case, there is no prior information about the variable *X,* so the distribution has infinite variance and a somewhat arbitrary zero mean.

In all application fields, the correct processing order and the age of variable contents are vital for the correctness of algorithms. In fact, following the structural design of the factor graph, the arrangement of messages in message schedules is one of the core activities in algorithm design based on factor graphs.

In the above example, Gaussian probabilistic algebra was used, resulting in simple scalar arithmetic algorithms. In the general case, this arithmetic is for multi-variable systems and involves matrix/vector algebra. In the case of coding theory, discrete Boolean or integer arithmetic may be used.

Thus, in general, a factor graph model may comprise one or more of the following: the factor graph structure, message definitions, and/or message schedule definitions, e.g., authored by the algorithm designer. However, the message schedule definitions may be derived from the factor graph structure and/or the message definitions. Indeed, providing this information enables an algorithm concept design based on factor graphs, conducted by signal processing and/or control specialists. Based on these preliminaries and a hierarchical structure, the present disclosure proposes enriching the hierarchical sub-graphs with information on software components, runnables and/or computing target nodes; cf. Figure 6. This information can be added by software engineering specialists, leading to an enriched model. The enriching is ideally done in a dedicated view, e.g., of a (multi-disciplinary) engineering tool, that for example exposes the message schedule, but hides the arithmetic details of the algorithms.

From the enriched model, i.e. the factor graph model, e.g., as shown in Figure 6, schedule constraints and communication matrix elements may be synthesized. The synthesis rules, by way of which an execution schedule and/or a message schedule is generated, are discussed in the following sections.

As can be seen in the example provided in Figure 6, a first step may comprise the allocation of software components to one or more computing nodes, depicted by the boxes formed by dashed lines in Figure 6. Then the messages between distinct computing nodes (or boxes, in that case) may define the message schedule, e.g., in form of a communication matrix and/or the messages within a software component, also depicted by a box formed by a dashed line in Figure 6, may define the execution schedule of executable functions of that software component. Thus in general allocation of software components comprising one or more executable functions may be made in the factor graph model by assigning them to one or more nodes in the factor graph model. Then again a software component may be formed by selecting the factor graph nodes representing executable functions. Instead of the boxes shown, any other means may be used to select executable functions and/or to allocate software components and/or computing nodes, such as ECUs.

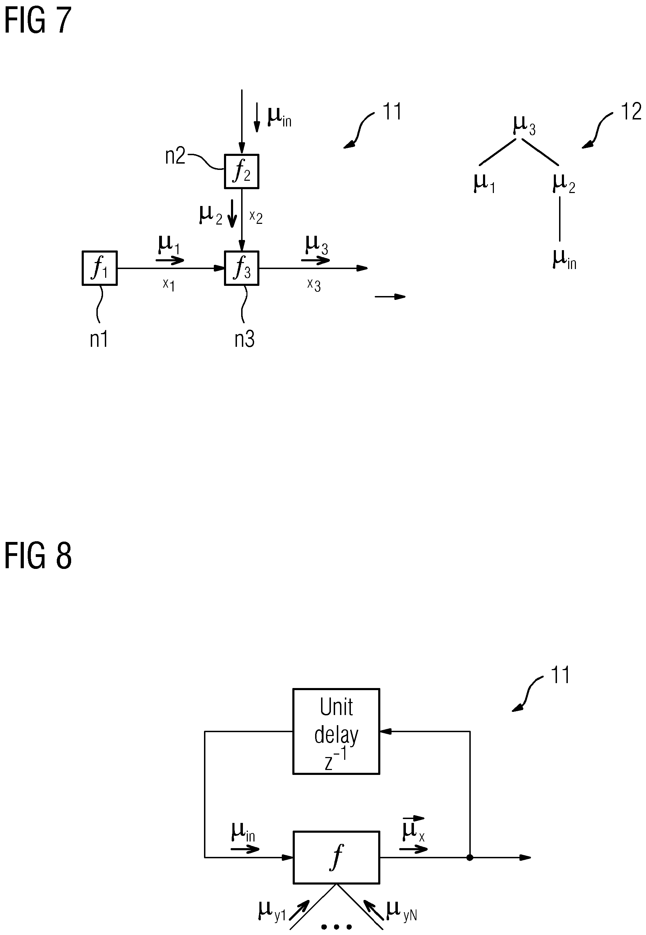

The generation of a scheduling matrix, representing an execution schedule, is described in connection with Figure 7. Within a computing node 11, the scheduling task consists in allocating computation time for all runnable entities, i.e. executable functions, in a schedule. In embedded systems, static scheduling methods prevail. It should be understood that a scheduling matrix is just one representation of an execution schedule and that other representations may be chosen.

One or more of the following steps may be used in order to determine a scheduling matrix (based on a factor graph model 11): 1) For an outgoing message from a computing node, e.g. message **µ**₃, a spanning tree 12 to internal source nodes (i.e. nodes n1, n2 of the sub-graph of Figure 7) or to external messages, e.g. **µ**ᵢₙ, **µ**₂, **µ**₁ may be computed. The spanning tree 12 may define a total order on the message calculations. Scheduling constraints may be added to a (global) constraint list. Such constraints may comprise one or more dependency constraints and/or one or more data age constraints. 2) A (global) constraint list may be used. Thereby a concrete schedule, using constraint solvers may be obtained. The scheduling constraints may be included in a suitable model, e.g. using the AMALTHEA standard. Further, so called runnable sequencing constraints can be derived from the message order provided in a message schedule. These sequencing constraints may comprise one or more of the following: for each message in the schedule, find the outgoing node N, extract the runnable that node N is allocated to. Thereby the message list may be transformed into a runnable list, i.e., preferably ordered list of one or more executable functions. Further sequencing constraints may comprise any one or more of the following: Removing consecutive duplicates of runnables from the list and/or from a list of length L, and deriving L-1 runnable sequencing constraints, namely one constraint for each pair. 3) A user may additionally annotate one or more outgoing messages with a timing deadline.

AMALTHEA is an example of a platform for engineering embedded multi- and many-core software systems. Thus AMALTHEA may be used to configure an automation system. The platform enables the creation and management of complex tool chains including simulation and validation. Alternatively, any such platform besides AMALTHEA may be used, i.e. a platform for engineering embedded multi- and many-core software systems and/or for simulation and validation. An automation system model, such as a factor graph model as proposed, which may be input into the platform, may contain the information required to simulate, analyze and optimize performance. It may also contain information about software, hardware, timing behavior, and constraints for the system under development.

Now, turning to cyclic factor graph models an exemplary embodiment is shown in Figure 8. Many signal processing and control algorithms are cyclic, for instance Kalman filters, sensor fusion algorithms, etc. In many cases, variable values from the previous cycle have to be preserved for the subsequent cycle. Multiple cycles may be resolved by using Trellis-like unfoldings of the graphs. In order to better support schedule generation, a delay block known from block diagrams may be introduced into factor graphs, cf. Figure 8. In Figure 8, the message **µ***ₓ* from one cycle needs to be re-used in the subsequent cycle to compute some function ***f***. This relationship is represented by the delay block, shown by the mathematical notation ***z*** ⁻¹, known from the Z-transformation. The delay block copies the content of message **µ***ₓ* to message **µ**ᵢₙ.

In cyclic factor graphs, the processing order may not be automatically derived/derivable from dependency trees. Thus, an algorithm designer may have to provide input in order to break one or more cycles. Either way, the message scheduling is again a core activity of algorithm design.

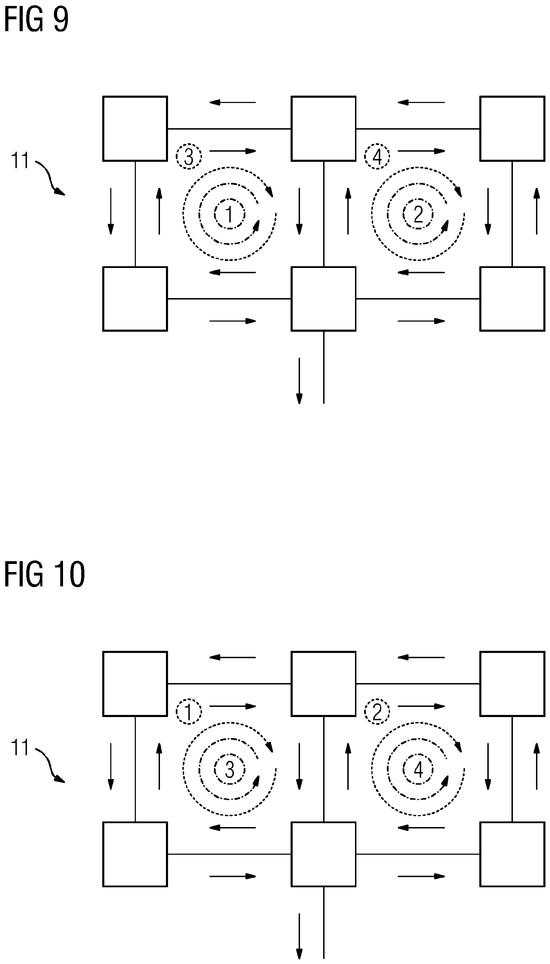

Figure 9 shows a factor graph with two cycles and messages in each direction on both cycles. Figure 9 also shows a particular choice for ordering the cycles. A first cycle may be executed in a counter-clockwise order. A second cycle may be executed in a counter-clockwise order as well. A third cycle may be executed in a clockwise order. A fourth cycle may be executed in a clockwise order. Note that Figure 9 does not indicate the starting points within cycles. The appropriateness of all these choices depends on the application domain and may not necessarily be decided in the abstract domain.

In Figure 10 the same factor graph as in Figure 9 is shown. However, the two cycles now are executed in an alternative cycle schedule. According to Figure 10 the first cycle is executed in a clockwise order. The second cycle is executed in a clockwise order. The third cycle is executed in a counter-clockwise order. The fourth cycle is executed in a counter-clockwise order. As in the cycle-free case, the message schedules may lead to constraints on the runnable schedules once the subgraphs are allocated to runnables. The scheduling constraints may be collected in the internal data structures of an engineer tool, such as a computer program implementing one or more of the method steps and functionalities as disclosed herein. For further usage, they the scheduling constraints are generated into an external schedule model format such as AMALTHEA. AMALTHEA provides, among others, the following modeling elements: Process Deadlines, Runnable Sequencing Constraints, Data Age Constraints, Data Coherency Constraints.

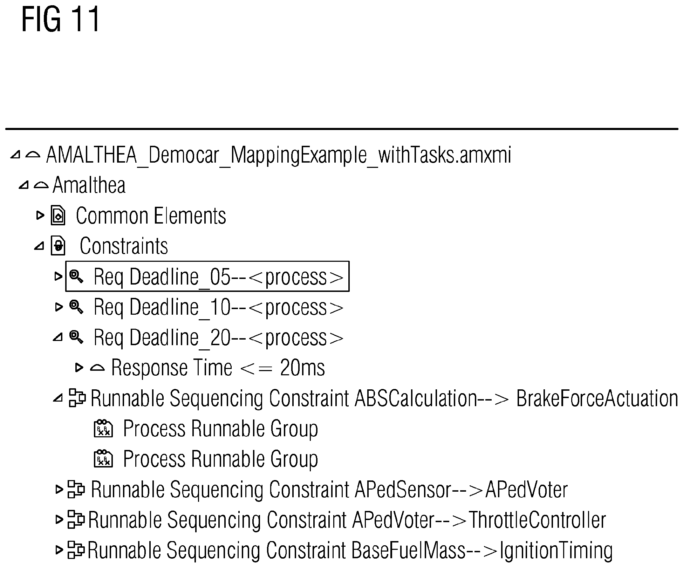

Annotated factor graph models may also be used to auto-generate runnable deadlines, Runnable Sequencing Constraints, and Data Age Constraints; cf. Figure 11 where an example of an AMALTHEA model with Process Deadlines and Runnable Sequencing Constraints is provided.

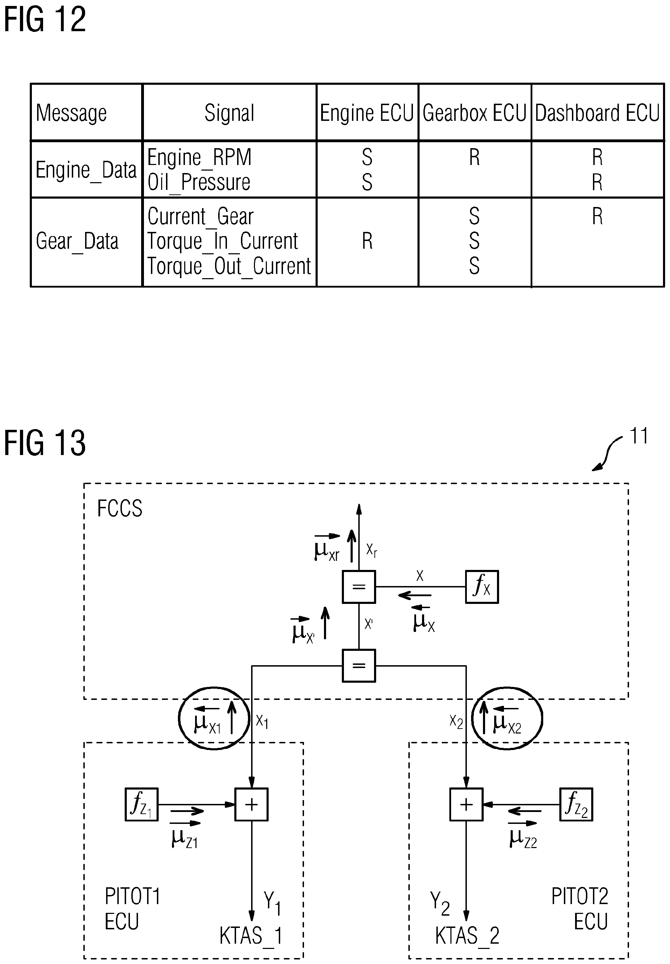

Now, the generation and use of a message schedule will be explained in further detail. A message schedule, e.g. in the form of a communication matrix, may describe the communication links between nodes in a communication network, e.g. of an automation system. For instance, it may describe the message exchange between embedded computing nodes (ECUs), for example in a vehicle, along with the signals contained in the messages, and their timing requirements. Specifically, the communication matrix may determine which node sends a message and which other nodes shall receive it. An example communication matrix is shown in Figure 12. Communication matrix design is today a largely manual activity.

The allocation of factor (sub-)graphs to computing nodes allows for an algorithm to discover messages that need to be sent across computing nodes. The order of message processing in all computing nodes allows for deducing the timing needs for factor graph messages sent over a communication network. The sender/receiver relationships expressed in a communication matrix follow directly from the factor graph messages. The factor graph messages in factor graph jargon may correspond to signals in communication matrix jargon. The packaging of signals into communication matrix messages is a matter of optimization; signals sharing senders and receivers are good candidates to (and thus may) be packed into messages in such a way that maximum message length is respected. The signal size may be inferred from the factor graph data types. The procedure is summarized in the following algorithm and may comprise one or more of the following steps: Compose a factor graph model corresponding to an operating process, for example including factor graph message passing, Allocate sub-graphs to computing nodes, Determine one or more messages traveling between allocated computing nodes (which may expresses a directed communication need), Determine signals of the communication matrix and their timing needs (which may be defined by a factor graph message data type), Determine one or more messages from the signal exchange need, and/or Optimizing for payload usage.

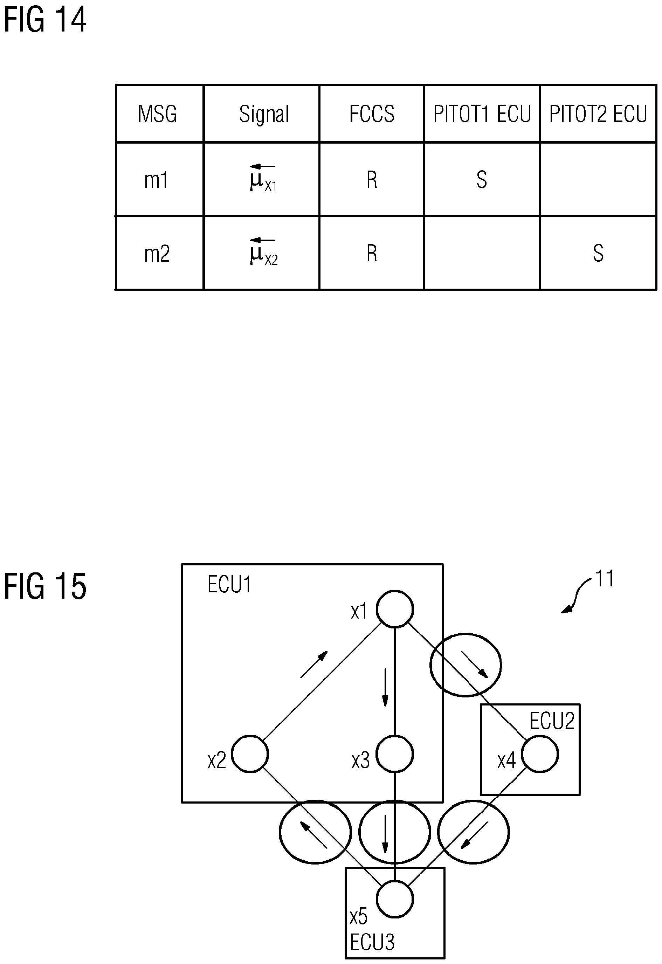

The above steps are exemplified by way of the airspeed estimation of Figure 5. The immediate signal processing calculations for PITOT1 and PITOT2 may be performed on dedicated ECUs, PITOT1 ECU and PITOT2 ECU, respectively, whereas the integration step is performed on the flight control computer system (FCCS). The allocation of computing units is shown by way of boxes in Figure 13, the boxes comprising sub-graphs. In the scenario of Figure 13, one signal, i.e. **µ**_{*x*1}, has to be sent from PITOT1 ECU to FCCS and one signal, **µ**_{*x*2}, is sent from PITOT2 ECU. To ensure that the data age constraints in computing node FCCS are met, the signals (factor graph messages) have to be sent at a rate synchronized with the execution period of the task running the FCCS code. The resulting communication matrix is shown in Figure 14. Note that in this example, the factor graph is again cycle-free. The handling of cyclic factor graphs is again described separately below.

The algorithm for resolving a cyclic factor graph is identical as for cycle-free factor graphs and may comprise one or more of the following steps: Compose a factor graph corresponding to an algorithm, including factor graph message passing, Allocate sub-graphs to computing nodes, e.g. ECUs, in Figure 15, Determine one or more messages traveling between allocated computing nodes (which may expresses a directed communication need), Determine signals of communication matrix and their timing needs (which may defined by a factor graph message data type), Determine one or more messages from signal exchange need, Optimize for payload usage.

The communication matrix for the airspeed measurement example as described in the above is shown in Figure 14, where S represents the sending of a message and R represents the reception of a message MSG, m1 and m2, respectively between the computing nodes FCCS, PITOT 1 ECU and PITOT 2 ECU.

Figure 15 shows a cyclic factor graph model distributed over three computing nodes, such as embedded computing nodes, ECU1, ECU2, ECU3 which in the present case describes the evaluation of a Markov Random Field. The communication-relevant messages are depicted as encircled arrows. The communication timing is again tightly coupled to the timing of execution inside each computing node, to ensure that communications does not introduce data age constraint violations. As can be seen by way of Figure 15 a computing nodes may comprise one or more executable functions, e.g. ECU1 comprises executable functions x1, x2, x3. In particular Markov chains may be used to model software runnables based on an architectural approach and as a way of sampling execution traces in an automation system having several computing nodes. With this approach, it is possible to determine the behavior from specific runnables to the overall ensemble behavior of the software project.

Additional steps determining an execution sequence of runnables (executable functions) or an message sequence may comprise, e.g. via input of a user, such as for example an deployment engineer, a byte order, one or more container sizes, encryption, signal-message allocation, one or more precise timings, buffer behaviors and/or initial values for one or more communication signals.

The concepts described throughout this disclosure provide a unique bridge between algorithm concept design and deployment to target computing equipment in a natural way. The deployment aspects covered comprise the scheduling within computing nodes, and the communication matrix design. The factor graph models may be used both by algorithm designers in the control and signal processing spaces, and by deployment engineers working in the software engineering space. Bridging disciplines is one of the great challenges in Systems Engineering, and the present disclosure provides a valuable element in the needed bridge.

In addition, the present disclosure opens up a bridge for multiple domains of algorithm design, namely signal estimation and filtering (Kalman filters, particle filters, sensor fusion, ...), probabilistic reasoning (Bayes networks, Markov chains, ...), error-correcting codes (Turbo codes, ...), machine learning (neural / deep learning network training, ...), and optimal control (linear quadratic regulation, ...).

In an advantageous implementation, a factor-graph domain-specific language (DSL) is used and realized with projectional editing mechanisms, so that role-specific content can be brought to the attention of the discipline engineer.

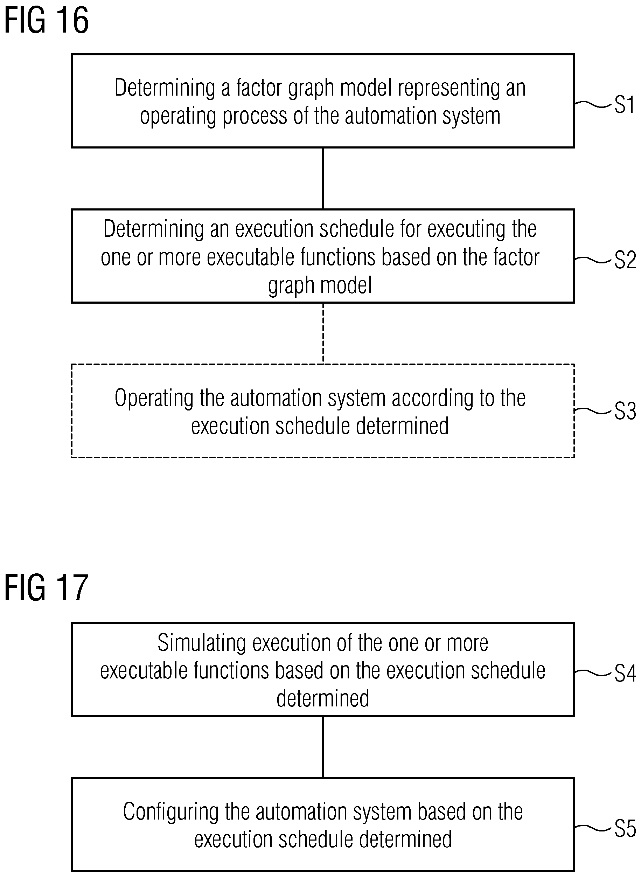

The methods and method steps proposed are further exemplified by the following Figures 16 to 28. According to a first embodiment shown Figure 16 a first step S1 comprises determining a factor graph model representing an operating process of an automation system.

A factor graph model provides a network of nodes and edges that can encode an operating process, e.g. of an automation system. In some implementations, a variable of the operating process is represented by an edge or half edge. It should be understood that a message (between nodes) carries one or more variables. Further, each computing node and/or executable function of the operating process may be represented by one or more nodes. One or more variables and/or executable functions are thus assigned to a computing node. The computing nodes may correspond to one or more microprocessors or microcontrollers of an automation system, e.g., encompassing one or more embedded systems.

A second step S2 comprises determining an execution schedule for executing the one or more executable functions based on the factor graph model. An execution schedule may define one or more execution times and one or more tasks to be performed by one or more computing nodes, by way of one or more executable functions, at the one or more execution times. An execution schedule may, additionally or alternatively, specify the order of tasks to be executed by way of one or more executable functions.

A third step S3 comprises operating the automation system according to the execution schedule determined. The configuration determined by way of the factor graph model may thus be employed when operating the actual automation system.

Now turning to Figure 17 a step S4 comprises simulating execution of the one or more executable functions based on the execution schedule determined. Thus, before actually employing the execution schedule determined, a simulation of the execution schedule determined may be run. To this end a model of the automation components and/or the computing nodes may be used that e.g. takes into account the processing power and/or memory available of the respective automation component and/or computing node.

A step S5 may comprise configuring the automation system based on the execution schedule determined. Hence, after obtaining the execution schedule in step S2 and/or after verifying and/or testing in step S4 the schedule may be loaded, e.g., in a control unit and/or in the respective automation components governing execution of the operating process of the automation system.

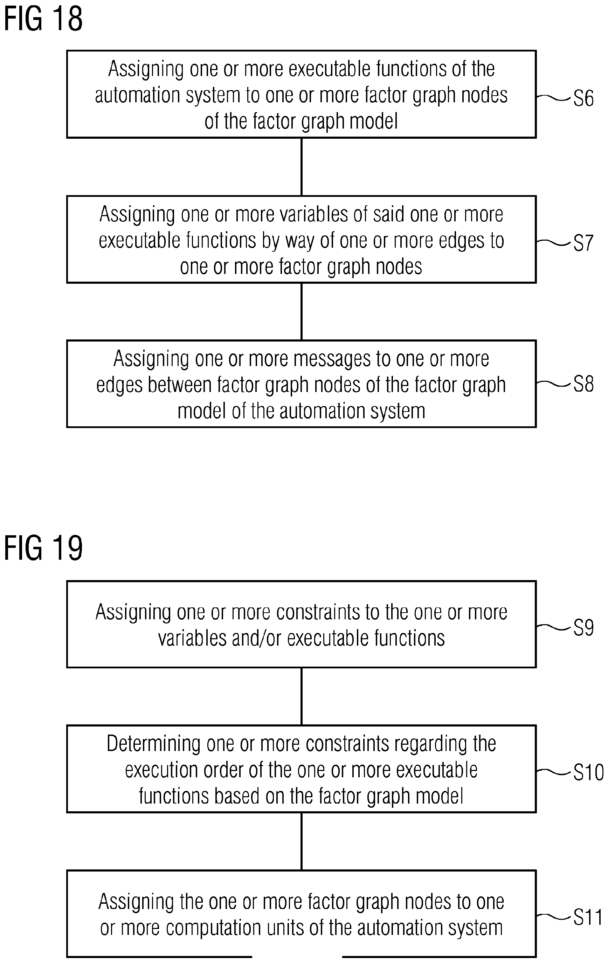

Now turning to Figure 18, the step S2 of determining an execution schedule for executing the one or more executable functions based on the factor graph model comprises the following steps: a step S6 of assigning one or more executable functions of the automation system to one or more factor graph nodes of the factor graph model, a step S7 of assigning one or more variables of said one or more executable functions by way of one or more edges to one or more factor graph nodes, and a step S8 of assigning one or more messages to one or more edges between factor graph nodes of the factor graph model of the automation system.

Now turning to Figure 19, the step S2 of determining an execution schedule for executing the one or more executable functions based on the factor graph model further comprises the following step, in addition or replacing S8: a step S9 of assigning one or more constraints to the one or more variables and/or executable functions, and optionally a step S10 of determining one or more constraints regarding the execution order of the one or more executable functions based on the factor graph model, and/or a step S11 of assigning the one or more factor graph nodes to one or more computation units of the automation system.

In general, a schedule constraint is a limitation placed on a project schedule that affects the start or end date of a task. Schedule constraints can take the form of fixed imposed dates for a work item. For example, a constraint date can be used to restrict the start of a task to occur no earlier than a specified date, rather than allowing the dates to be determined by the planning process. Scheduling constraints may include two types of constraints, temporal and resource constraints. For example the following constraint types are available: As soon as possible (default), Start no earlier than, Finish no later than.

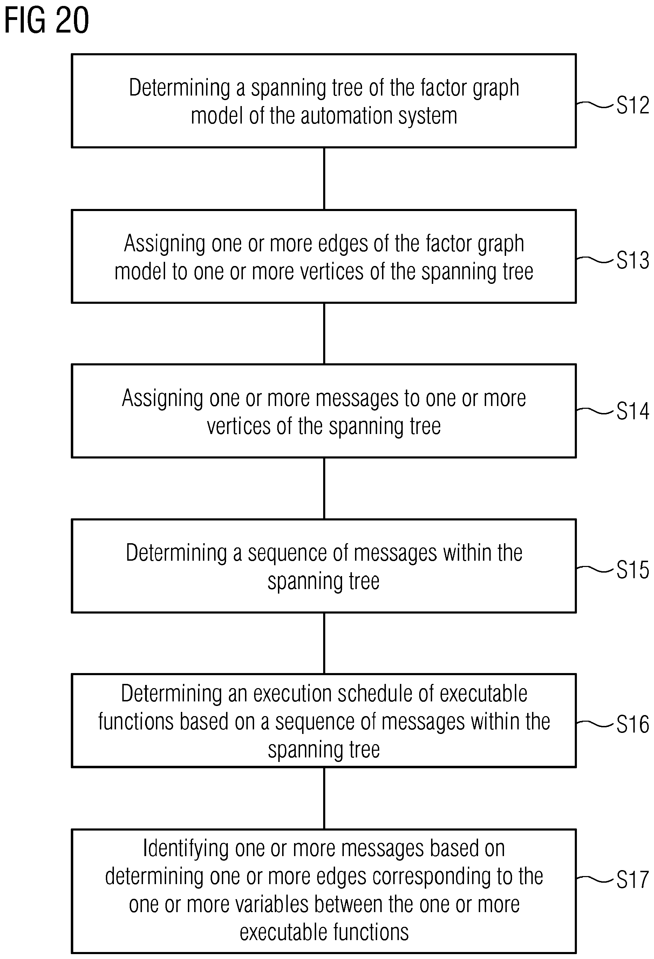

Now turning to Figure 20 the step S2 of determining an execution schedule for executing the one or more executable functions based on the factor graph model may comprise one or more of the following steps, preferably in addition to any one of the steps S6 to S11: a step S12 of determining a spanning tree of the factor graph model of the automation system, a step S13 of assigning one or more edges of the factor graph model to one or more vertices of the spanning tree, and/or a step S14 of assigning one or more messages to one or more vertices of the spanning tree.

Furthermore, following step S14 of assigning one or more messages to one or more vertices of the spanning tree any one of the following steps may be performed: a step S15 of determining a sequence of messages within the spanning tree, a step of S16 of determining an execution schedule of executable functions based on a sequence of messages within the spanning tree and/or a step S17 of identifying one or more messages based on determining one or more edges corresponding to the one or more variables between the one or more executable functions.

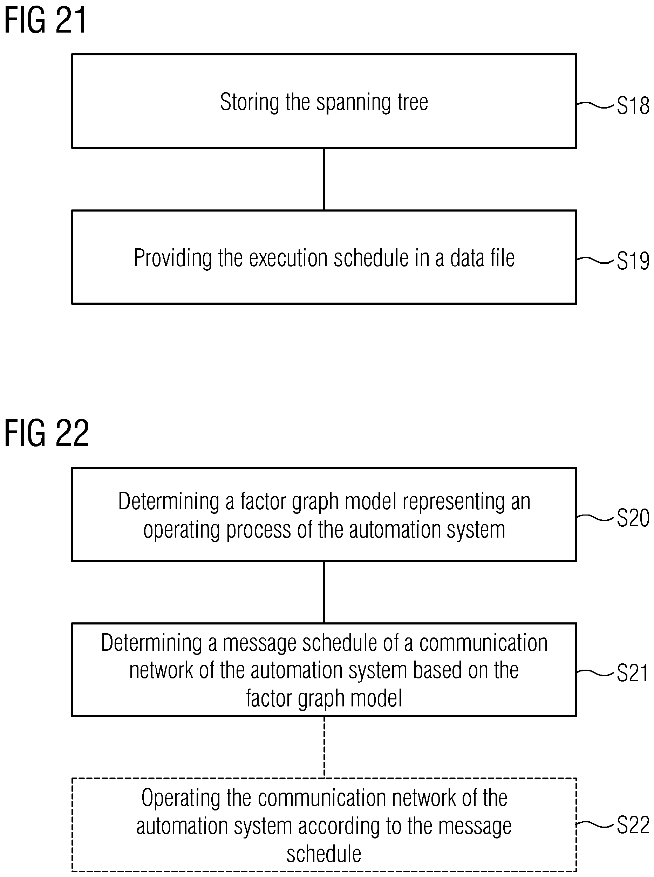

Now turning to Figure 21 the step S2 of determining an execution schedule for executing the one or more executable functions based on the factor graph model may comprise, preferably after performing any one of the steps S13 to S17, one or more of the following steps: a step S18 of storing the spanning tree and/or a step S19 providing the execution schedule in a data file.

Now turning to Figure 22 method steps for configuring an automation system are disclosed. It should be understood that any one of the steps as shown in Figure 22 may be performed in addition or instead of any one of the method steps as described in connection with Figures 16 to 21. Hence a step S20 may comprise determining a factor graph model representing an operating process of the automation system. Step S20 may correspond to step S1 of Figure 16 and reference is made to corresponding description. Subsequently a step S21 of determining a message schedule of a communication network of the automation system based on the factor graph model may be performed. After step S21 a step S22 of operating the communication network of the automation system according to the message schedule may be performed.

With respect to Figure 22 and the following figure it may regarded as object of the method steps disclosed therein to ensure that an automation system is set up properly and that in particular one or more message of an operating process' algorithm is transmitted and/or received in an appropriate order and/or with appropriate timing.

An automation system may comprise one or more automation components, e.g. devices such as programmable logic controllers (PLCs) and IO modules which are widely used in industry and process control -as already described in connection with Figure 4a. The automation components may comprise one or more computing nodes, such for data and/or signal processing, for example one or more microprocessors or microcontrollers. The communication network may thus communicatively couple the one or more automation components and/or the computing nodes. Communication via the communication network may be performed by use of one or more communication protocols. Within the protocol, one or more messages may be defined via which data may be transmitted and/or received by the computing nodes. The one or more message may thus be used to transmit and/or receive controlled and/or payload data. It should be understood that an automation system may comprise one or more communication networks. Furthermore, an automation component may comprise one or more computing nodes and thus may itself comprise a communication network. A message schedule may comprise one or more messages scheduled for transmission on the network, e.g. from the first network station to the second network station. A message schedule, may e.g. be represented by a communication matrix, and thus describes the communication links between nodes in a communication network and is explained in further detail inter alia in Figures 12 and 14 and the corresponding description.

A step 22 may comprise operating the communication network of the automation system according to the message schedule.

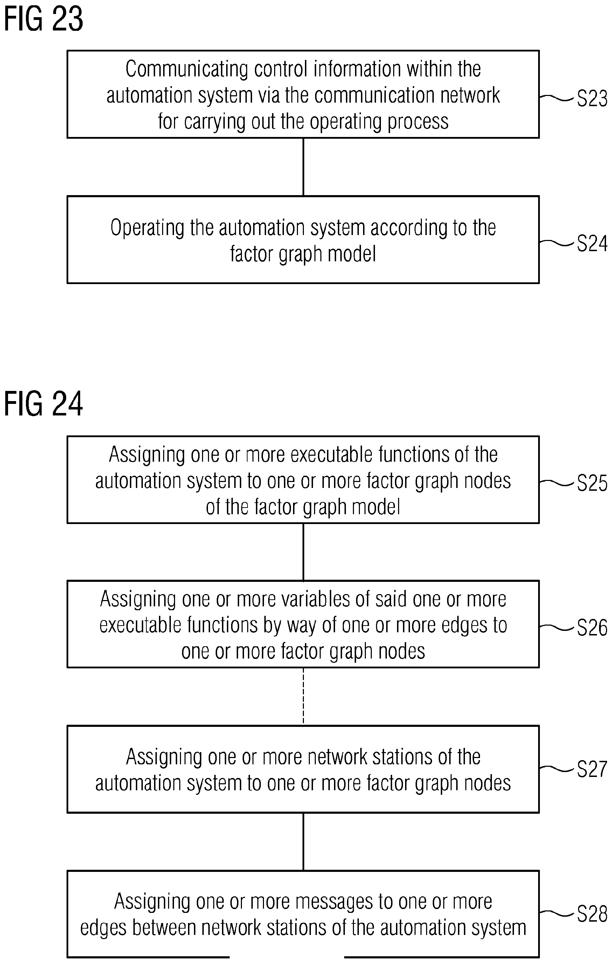

Now turning to Figure 23 additional steps are described. For example step 22 may comprise a step S23 of communicating control information within the automation system via the communication network for carrying out the operating process. Thus as a result a step S24 may comprise operating the automation system according to the factor graph model.

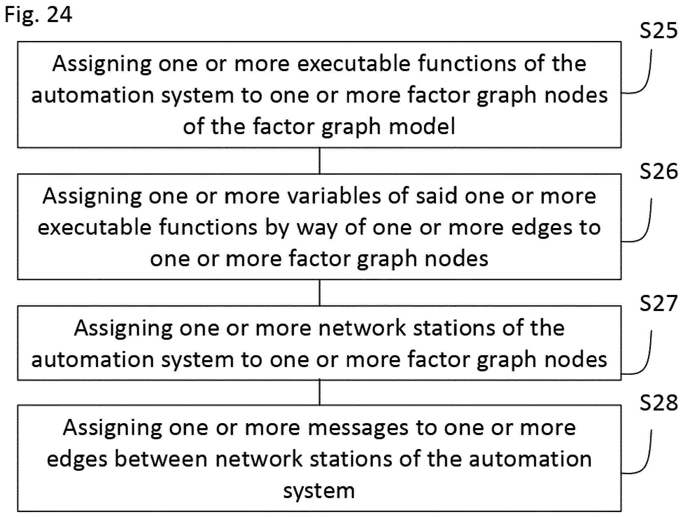

Now turning to Figure 24 the steps 20 and/or 21 may comprise any one or more of the following steps: a step S25 of assigning one or more executable functions of the automation system to one or more factor graph nodes of the factor graph model, a step S26 of assigning one or more variables of said one or more executable functions by way of one or more edges to one or more factor graph nodes, a step S27 of assigning one or more network stations of the automation system to one or more factor graph nodes, and/or a step S28 of assigning one or more messages to one or more edges between network stations of the automation system.

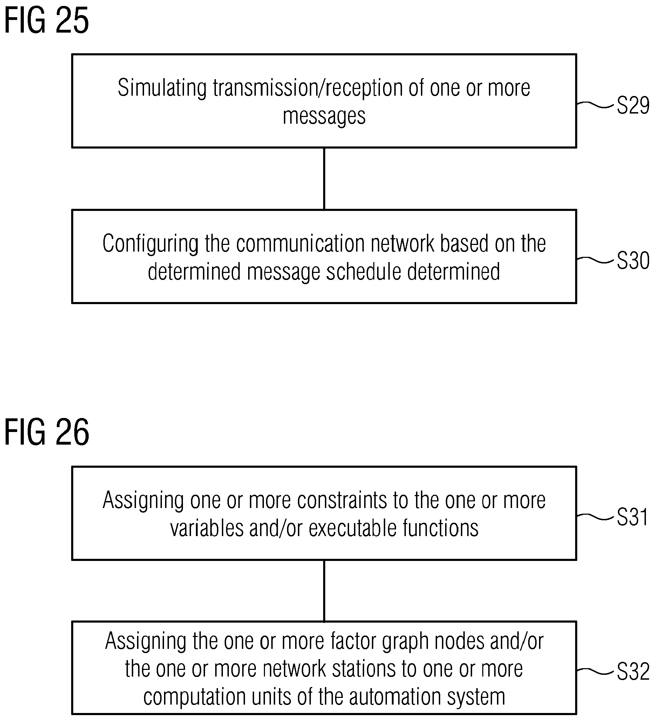

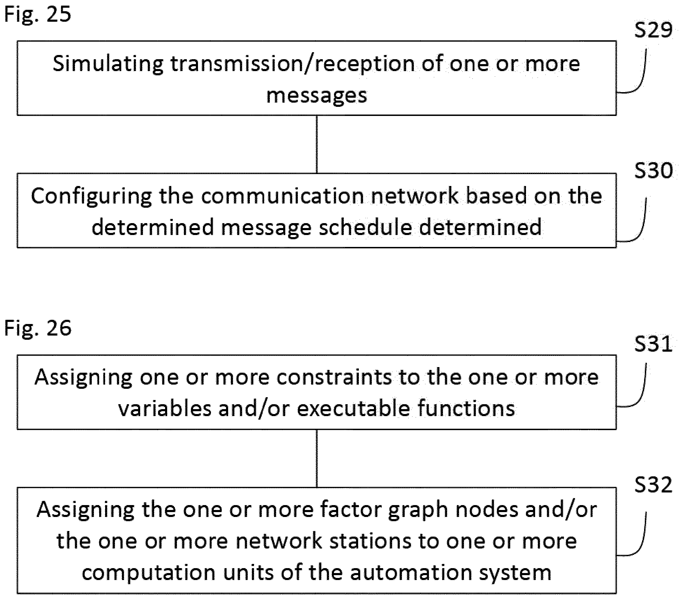

Now turning to Figure 25, after determining a message schedule, e.g. in step S21, a further step S29 of simulating transmission/reception of one or more messages may be performed. Furthermore, preferably after either step S21 and/or step S29, a step S30 of configuring the communication network based on the determined message schedule determined may be performed.

Now turning to Figure 26, step 20 and/or 21, may comprise a step S31 of assigning one or more constraints to the one or more variables and/or executable functions. Furthermore steps S20 and/or S21 may comprise, e.g. in addition to step S31, a step S32 of assigning the one or more factor graph nodes and/or the one or more network stations to one or more computation units of the automation system.

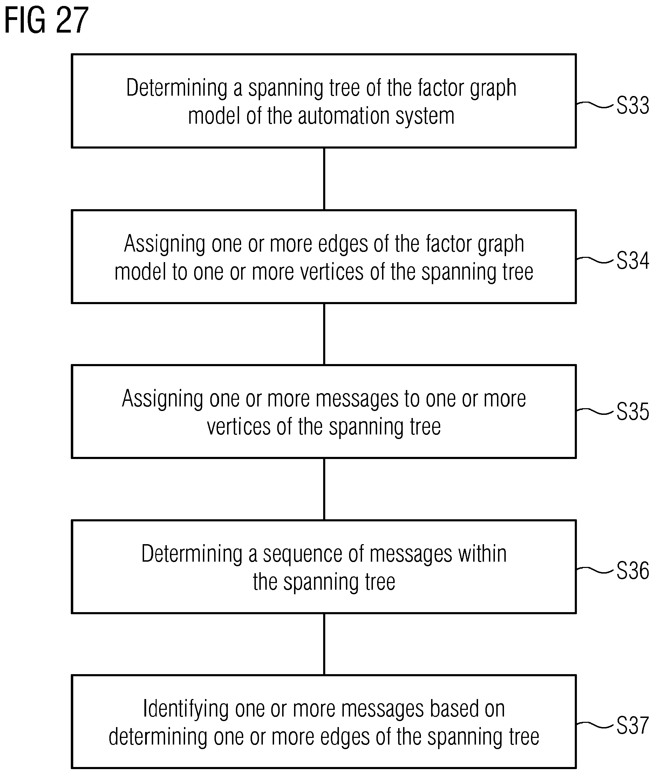

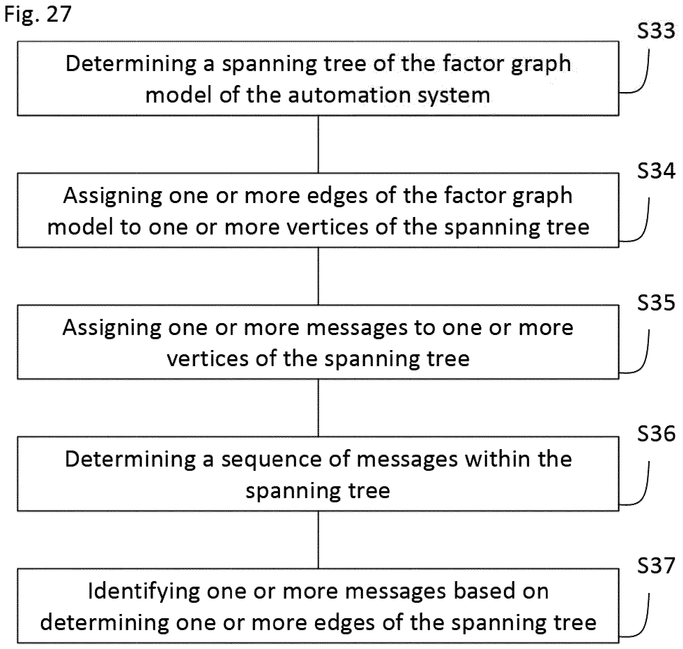

In Figure 27 further steps which may be performed in addition to steps S20 and/or S21 are described in more detail. Accordingly steps S20 and/or S21 may comprise one or more of the following steps: a step a step S33 of determining a spanning tree of the factor graph model of the automation system, a step S34 of assigning one or more edges of the factor graph model to one or more vertices of the spanning tree, a step S35 of assigning one or more messages to one or more vertices of the spanning tree, a step S36 of determining a sequence of messages within the spanning tree and/or a step S37 of identifying one or more messages based on determining one or more edges of the spanning tree.

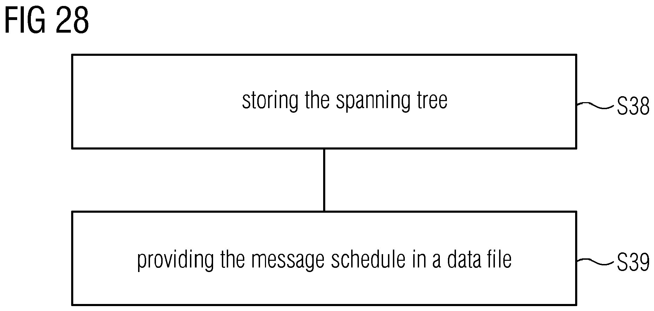

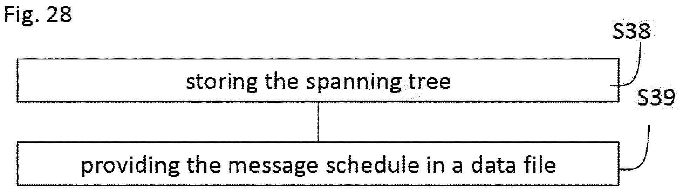

Further steps are described in connection with Figure 28 in addition to any one of the method steps S33 to S37 a step S38 of storing the spanning tree and/or a step S39 of providing the message schedule in a data file may be performed.

Furthermore it should be noted that any one of the above steps S1 to S39, such as in particular steps S1 and/or S2, and/or steps S20 and/or S21, may be performed repeatedly in order to obtain an execution schedule and/or message schedule. Thus multiple execution schedules and/or message schedules may be obtained which may be compared pair-wise or otherwise with one another in order to obtain an optimized execution and/or message schedule for the automation system at hand. Thus, constraints as computing power and/or memory available by one or more computing nodes may be considered when determining an execution schedule or a message schedule.

A further example may include a non-transitory computer readable medium encoded with executable instructions (such as a software component on a storage device) that when executed, causes at least one processor to carry out any one of the method steps described, e.g. as shown in Figure 16 to 28.

Later, when the execution schedule and/or the message schedule has been determined they may be loaded by the at least one processor from at least one memory and the at least one processor causes the respective automation components top operate accordingly. By way of example, the simulation and the control of the respective automation component may be carried out by the same device, e.g. the same processor. Alternatively simulation may be performed, e.g. in the cloud-infrastructure as depicted in Figure 4a.

Another embodiment may include a product or apparatus including at least one hardware, software, and/or firmware based processor, computer, component, controller, means, module, and/or unit configured for carrying out functionality corresponding to this described method. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design).

## Claims

1. A computer implemented method of configuring an automation system (10), the method comprising and/or initiating the steps of:
determining (S1) a factor graph model (11) representing an operating process of the automation system (10), the operating process comprising one or more executable functions (f₁, f₂, f₃), wherein determining the factor graph model comprises assigning (S7) one or more variables (X1, X2, X3) of said one or more executable functions (f1, f2, f3) by way of one or more edges to one or more factor graph nodes (n1, n2, n3) of the factor graph model,
assigning one or more resources of the automation system to one or more factor graph nodes (n1, n2, n3) of the factor graph model (11), wherein one or more resources of the automation system comprises at least one of one or more computing nodes (ECU) and the one or more executable functions (f₁, f₂, f₃),
assigning (S8) one or more messages (µ₁, µ₂, µ₃) to one or more edges between factor graph nodes (n1, n2, n3) of the factor graph model (11) of the automation system (10), and/or
assigning (S9) one or more constraints to the one or more variables and/or executable functions (f₁, f₂, f₃), determining (S2) an execution schedule for executing the one or more executable functions (f₁, f₂, f₃) based on the assignment, and
operating (S3) the automation system (10) according to the execution schedule determined, wherein the automation system (10) determines one or more variables (x, x₁, x₂, x₃) representing physical properties and/or one or more control parameters and/or one or more product/production properties for carrying out the operating process.

2. Method according to any one of the preceding claims, further comprising the step of:
Simulating (S4) execution of the one or more executable functions (f₁, f₂, f₃) based on the execution schedule determined, and/or
Configuring (S5) the automation system (10) based on the execution schedule determined.

3. Method according to any one of the preceding claims, wherein the step of assigning one or more resources of the automation system to one or more factor graph nodes (n1, n2, n3) of the factor graph model (11) further comprising and/or initiating the step of:
Assigning (S6) at least one of the one or more computing nodes (ECU) and the one or more executable functions (f₁, f₂, f₃) of the automation system (10) to one or more factor graph nodes (n1, n2, n3) of the factor graph model (11).

4. Method of according to any one of the preceding claims further comprising and/or initiating the step of:
Determining (S10) one or more constraints regarding the execution schedule of the one or more executable functions (f₁, f₂, f₃) based on the factor graph model (11).

5. Method according to any one of the preceding claims, wherein the step of determining the factor graph model comprises:
Assigning (S11) the one or more factor graph nodes (n1, n2, n3) to one or more computation units of the automation system (10), the one or more computation units being implemented in hardware.

6. Method according to any one of the preceding claims, further comprising and/or initiating the step of:
Determining (S12) a spanning tree (12) of the factor graph model (11) of the automation system (10).

7. Method according to claim 6, wherein the step of determining the spanning tree (12) further comprising and/or initiating the step of:
Assigning (S13) one or more edges of the factor graph model (11) to one or more vertices of the spanning tree (12).

8. Method according to claim 6, wherein the step of determining the spanning tree further comprises:
Assigning (S14) one or more messages (µ₁,µ₂,µ₃) to one or more vertices of the spanning tree (12).

9. Method according to any one of the preceding claims 6-8, wherein the step of determining the execution schedule further comprises the step of
Determining (S15) a sequence of messages (µ₁,µ₂,µ₃) within the spanning tree (12), said messages (µ₁,µ₂,µ₃) comprising the one or more variables (X₁, X₂, X₃), in particular based on the one or more constraints of the one or more variables (X₁, X₂, X₃) or executable functions (f₁, f₂, f₃).

10. Method according to any one of the preceding claims 6-9, wherein the step of determining the execution schedule further comprises the step of
Determining (S16) an execution schedule of executable functions (f₁, f₂, f₃) based on a sequence of messages (µ₁,µ₂,µ₃) within the spanning tree (12), said messages (µ₁,µ₂,µ₃) comprising the one or more variables (X₁, X₂, X₃), in particular based on the one or more constraints of the one or more variables (X₁, X₂, X₃) or executable functions (f₁, f₂, f₃).

11. Method according to any one of the preceding claims 6-10, wherein the step of determining the spanning tree (12) further comprising and/or initiating the step of:
Identifying (S17) one or more messages (µ₁,µ₂,µ₃) based on determining one or more edges corresponding to the one or more variables (X₁, X₂, X₃) between the one or more executable functions (f₁, f₂, f₃).

12. Method according to any one of the preceding claims 6-11, further comprising and/or initiating the step of:
Storing (S18) the spanning tree (12), e.g. by storing the one or more messages (µ₁,µ₂,µ₃) and/or one or more factor graph nodes (n1, n2, n3) connected by the one or more edges of the factor graph model (11).

13. Method according to any one of the preceding claims, further comprising and/or initiating the step of:
Providing (S19) the execution schedule in a data file, the data file comprising information about an order of one or more executable functions (f₁, f₂, f₃) and/or timing of the one or more executable functions (f₁, f₂, f₃).

14. Method according to any one of the preceding claims, further comprising and/or initiating the step of:
Repeatedly performing any one or more of the method steps of claims 1 to 13.

15. A data processing apparatus for designing and/or configuring an automation system, the apparatus operative to perform any one of the preceding claims.

16. A computer program product, comprising computer readable code, that when executed on a processor, performs any one of the method claims 1 to 14.

## Patentansprüche

1. Computerimplementiertes Verfahren zum Konfigurieren eines Automatisierungssystems (10), wobei das Verfahren die folgenden Schritte umfasst und/oder initiiert:
Bestimmen (S1) eines Faktorgraphenmodells (11), das einen Betriebsprozess des Automatisierungssystems (10) darstellt, wobei der Betriebsprozess eine oder mehrere ausführbare Funktionen (f₁, f₂, f₃) umfasst und das Bestimmen des Faktorgraphenmodells ein Zuweisen (S7) einer oder mehrerer Variablen (X1, X2, X3) der einen oder der mehreren ausführbaren Funktionen (f₁, f2, f3) in Form einer oder mehrerer Kanten zu einem oder mehreren Faktorgraphenknoten (n1, n2, n3) des Faktorgraphenmodells umfasst,
Zuweisen eines oder mehrerer Betriebsmittel des Automatisierungssystems zu einem oder mehreren Faktorgraphenknoten (n1, n2, n3) des Faktorgraphenmodells (11), wobei ein oder mehrere Betriebsmittel des Automatisierungssystems einen oder mehrere Rechenknoten (ECU) und/oder die eine oder die mehreren ausführbaren Funktionen (f₁, f₂, f₃) umfassen,
Zuweisen (S8) einer oder mehrerer Nachrichten (µ₁, µ₂, µ₃) zu einer oder mehreren Kanten zwischen Faktorgraphenknoten (n1, n2, n3) des Faktorgraphenmodells (11) des Automatisierungssystems (10) und/oder
Zuweisen (S9) einer oder mehrerer Abhängigkeiten zu der einen oder den mehreren Variablen und/oder ausführbaren Funktionen (f₁, f₂, f₃),
Bestimmen (S2) eines Ausführungsplans zum Ausführen der einen oder der mehreren ausführbaren Funktionen (f₁, f₂, f₃) auf der Grundlage der Zuweisung und
Betreiben (S3) des Automatisierungssystems (10) gemäß dem Ausführungsplan, der bestimmt wurde, wobei das Automatisierungssystem (10) eine oder mehrere Variablen (x, x₁, x₂, x₃), die physische Eigenschaften darstellen, und/oder einen oder mehrere Steuerparameter und/oder eine oder mehrere Produkt-/Produktionseigenschaften zum Ausführen des Betriebsprozesses bestimmt.

2. Verfahren nach einem der vorhergehenden Ansprüche, das ferner den folgenden Schritt umfasst:
Simulieren (S4) einer Ausführung der einen oder der mehreren ausführbaren Funktionen (f₁, f₂, f₃) auf der Grundlage des Ausführungsplans, der bestimmt wurde, und/oder
Konfigurieren (S5) des Automatisierungssystems (10) auf der Grundlage des Ausführungsplans, der bestimmt wurde.

3. Verfahren nach einem der vorhergehenden Ansprüche, wobei der Schritt des Zuweisens eines oder mehrerer Betriebsmittel des Automatisierungssystems zu einem oder mehreren Faktorgraphenknoten (n1, n2, n3) des Faktorgraphenmodells (11) ferner den folgenden Schritt umfasst und/oder initiiert:
Zuweisen (S6) des einen oder der mehreren Rechenknoten (ECU) und/oder der einen oder der mehreren ausführbaren Funktionen (f₁, f₂, f₃) des Automatisierungssystems (10) zu einem oder mehreren Faktorgraphenknoten (n1, n2, n3) des Faktorgraphenmodells (11).

4. Verfahren nach einem der vorhergehenden Ansprüche, das ferner den folgenden Schritt umfasst und/oder initiiert:
Bestimmen (S10) einer oder mehrerer Abhängigkeiten hinsichtlich des Ausführungsplans der einen oder der mehreren ausführbaren Funktionen (f₁, f₂, f₃) auf der Grundlage des Faktorgraphenmodells (11).

5. Verfahren nach einem der vorhergehenden Ansprüche, wobei der Schritt des Bestimmens des Faktorgraphenmodells Folgendes umfasst:
Zuweisen (S11) des einen oder der mehreren Faktorgraphenknoten (n1, n2, n3) zu einer oder mehreren Recheneinheiten des Automatisierungssystems (10), wobei die eine oder die mehreren Recheneinheiten in Hardware implementiert sind.

6. Verfahren nach einem der vorhergehenden Ansprüche, das ferner den folgenden Schritt umfasst und/oder initiiert:
Bestimmen (S12) eines Spannbaums (12) des Faktorgraphenmodells (11) des Automatisierungssystems (10).

7. Verfahren nach Anspruch 6, wobei der Schritt des Bestimmens des Spannbaums (12) ferner den folgenden Schritt umfasst und/oder initiiert:
Zuweisen (S13) einer oder mehrerer Kanten des Faktorgraphenmodells (11) zu einem oder mehreren Scheitelpunkten des Spannbaums (12).

8. Verfahren nach Anspruch 6, wobei der Schritt des Bestimmens des Spannbaums ferner Folgendes umfasst:
Zuweisen (S14) einer oder mehrerer Nachrichten (µ₁, µ₂, µ₃) zu einem oder mehreren Scheitelpunkten des Spannbaums (12).

9. Verfahren nach einem der vorhergehenden Ansprüche 6-8, wobei der Schritt des Bestimmens des Ausführungsplans ferner den folgenden Schritt umfasst:
Bestimmen (S15) einer Folge von Nachrichten (µ₁, µ₂, µ₃) im Spannbaum (12), wobei die Nachrichten (µ₁, µ₂, µ₃) die eine oder die mehreren Variablen (X₁, X₂, X₃) umfassen, insbesondere auf der Grundlage der einen oder der mehreren Abhängigkeiten der einen oder der mehreren Variablen (X₁, X₂, x₃) oder ausführbaren Funktionen (f₁, f₂, f₃).

10. Verfahren nach einem der vorhergehenden Ansprüche 6-9, wobei der Schritt des Bestimmens des Ausführungsplans ferner den folgenden Schritt umfasst:
Bestimmen (S16) eines Ausführungsplans ausführbarer Funktionen (f₁, f₂, f₃) auf der Grundlage einer Folge von Nachrichten (µ₁, µ₂, µ₃) im Spannbaum (12), wobei die Nachrichten (µ₁, µ₂, µ₃) die eine oder die mehreren Variablen (X₁, X₂, X₃) umfassen, insbesondere auf der Grundlage der einen oder der mehreren Abhängigkeiten der einen oder der mehreren Variablen (X₁, X₂, X₃) oder ausführbaren Funktionen (f₁, f₂, f₃).

11. Verfahren nach einem der vorhergehenden Ansprüche 6-10, wobei der Schritt des Bestimmens des Spannbaums (12) ferner den folgenden Schritt umfasst und/oder initiiert:
Identifizieren (S17) einer oder mehrerer Nachrichten (µ₁, µ₂, µ₃) auf der Grundlage des Bestimmens einer oder mehrerer Kanten, die der einen oder den mehreren Variablen (X₁, X₂, X₃) entsprechen, zwischen der einen oder den mehreren ausführbaren Funktionen (f₁, f₂, f₃).

12. Verfahren nach einem der vorhergehenden Ansprüche 6-11, das ferner den folgenden Schritt umfasst und/oder initiiert:
Speichern (S18) des Spannbaums (12) z. B. durch Speichern der einen oder der mehreren Nachrichten (µ₁, µ₂, µ₃) und/oder eines oder mehrerer Faktorgraphenknoten (n1, n2, n3), die durch die eine oder die mehreren Kanten des Faktorgraphenmodells (11) verbunden sind.

13. Verfahren nach einem der vorhergehenden Ansprüche, das ferner den folgenden Schritt umfasst und/oder initiiert:
Bereitstellen (S19) des Ausführungsplans in einer Datendatei, wobei die Datendatei Informationen über eine Reihenfolge einer oder mehrerer ausführbarer Funktionen (f₁, f₂, f₃) und/oder einen Zeitablauf der einen oder der mehreren ausführbaren Funktionen (f₁, f₂, f₃) umfasst.

14. Verfahren nach einem der vorhergehenden Ansprüche, das ferner den folgenden Schritt umfasst und/oder initiiert:
wiederholtes Durchführen eines oder mehrerer der Verfahrensschritte nach den Ansprüchen 1 bis 13.

15. Datenverarbeitungsvorrichtung zum Entwerfen und/oder Konfigurieren eines Automatisierungssystems, wobei die Vorrichtung betreibbar ist, einen der vorhergehenden Ansprüche durchzuführen.

16. Computerprogrammprodukt, das computerlesbaren Code umfasst, der, wenn er in einem Prozessor ausgeführt wird, einen der Verfahrensansprüche 1 bis 14 durchführt.

## Revendications

1. Procédé mis en œuvre par ordinateur de configuration d'un système (10) d'automatisation, le procédé comprenant et/ou lançant les stades dans lesquels :
on détermine (S1) un modèle (11) de graphe de facteur représentant une opération de fonctionnement du système (10) d'automatisation, l'opération de fonctionnement comprenant une ou plusieurs fonctions (f₁, f₂, f₃) exécutables, dans lequel déterminer le modèle de graphe de facteur comprend affecter (S7) une ou plusieurs variables (X₁, X2, X3) de ladite ou desdites une ou plusieurs fonctions (f1, f2, f3) exécutables au moyen d'une ou de plusieurs arêtes à un ou aux plusieurs nœuds (n1, n2, n3) de graphe de facteur du modèle de graphe de facteur,
on affecte une ou plusieurs ressources du système d'automatisation à un ou plusieurs nœuds (n1, n2, n3) de graphe de facteur du modèle (11) de graphe de facteur, dans lequel une ou plusieurs ressources du système d'automatisation comprend au moins l'un d'un ou plusieurs nœuds (ECU) de calcul et de la une ou des plusieurs fonctions (f₁, f₂, f₃) exécutables,
on affecte (S8) un ou plusieurs messages (µ₁, µ₂, µ₃) à une plusieurs arêtes entre des nœuds (n1, n2, n3) de graphe de facteur du modèle (11) de graphe de facteur du système (10) d'automatisation,
et/ou
on affecte (S9) une ou plusieurs contraintes à la une ou au plusieurs variables et/ou fonctions (f₁, f₂, f₃) exécutables,
on détermine (S2) un plan d'exécution pour exécuter la une ou les plusieurs fonctions (f₁, f₂, f₃) exécutables sur la base de l'affectation, et
on fait fonctionner (S3) le système (10) d'automatisation suivant le plan d'exécution déterminé, le système (10) d'automatisation déterminant une ou plusieurs variables (x, x₁, x₂, x₃) représentant des propriétés physiques et/ou un ou plusieurs paramètres de commande et/ou une ou plusieurs propriétés de produit / de production pour effectuer l'opération de fonctionnement.

2. Procédé suivant l'une quelconque des revendications précédentes, comprenant en outre le stade dans lequel :
on simule (S4) l'exécution de la une ou des plusieurs fonctions (f₁, f₂, f₃) exécutables sur la base du plan d'exécution déterminé, et/ou
on configure (S5) le système (10) d'automatisation sur la base du plan d'exécution déterminé.

3. Procédé suivant l'une quelconque des revendications précédentes, dans lequel le stade d'affectation d'une ou de plusieurs ressources du système automatique au un ou aux plusieurs nœuds (n1, n2, n3) de graphe de facteur du modèle (11) de graphe de facteur comprend et/ou lance, en outre, le stade dans lequel : on affecte (S6) au moins l'un du un ou des plusieurs nœuds (ECU) de calcul et/ou de la une ou des plusieurs fonctions (f₁, f₂, f₃) exécutables du système (10) d'automatisation au un ou aux plusieurs nœuds (n1, n2, n3) de graphe de facteur du modèle (11) de graphe de facteur.

4. Procédé suivant l'une quelconque des revendications précédentes, comprenant et/ou lançant en outre le stade dans lequel :
on détermine (S10) une ou plusieurs contraintes concernant le plan d'exécution de la une ou des plusieurs fonctions (f₁, f₂, f₃) exécutables sur la base du modèle (11) de graphe de facteur.

5. Procédé suivant l'une quelconque des revendications précédentes, dans lequel le stade de détermination du modèle de graphe de facteur comprend :
affecter (S11) le un ou les plusieurs nœuds (n1, n2, n3) de graphe de facteur à une ou plusieurs unités de calcul du système (10) d'automatisation, la une ou les plusieurs unités de calcul étant mises en œuvre en matériel.

6. Procédé suivant l'une quelconque des revendications précédentes, comprenant et/ou lançant en outre le stade dans lequel :
on détermine (S12) un arbre (12) maximal du modèle (11) de graphe de facteur du système (10) d'automatisation.

7. Procédé suivant la revendication 6, dans lequel le stade de détermination de l'arbre (12) maximal comprend et/ou lance en outre le stade dans lequel :
on affecte (S13) une ou plusieurs arêtes du modèle (11) de graphe de facteur à un ou plusieurs sommets de l'arbre (12) maximal.

8. Procédé suivant la revendication 6, dans lequel le stade de détermination de l'arbre maximal comprend en outre :
l'affectation (S14) d'un ou de plusieurs messages (µ₁, µ₂, µ₃) à un ou à plusieurs sommets de l'arbre (12) maximal.

9. Procédé suivant l'une quelconque des revendications 6 à 8 précédentes, dans lequel le stade de détermination du plan d'exécution comprend en outre le stade dans lequel :
on détermine (S15) une séquence de messages (µ₁, µ₂, µ₃) au sein de l'arbre (12) maximal, les messages (µ₁, µ₂, µ₃) comprenant la une ou les plusieurs variables (X₁, X₂, X₃) reposant, en particulier sur la une ou les plusieurs contraintes de la une ou des plusieurs variables (X₁, X₂, X₃) ou fonctions (f₁, f₂, f₃) exécutables.

10. Procédé suivant l'une quelconque des revendications 6 à 9 précédentes, dans lequel le stade de détermination du plan d'exécution comprend en outre le stade dans lequel :
on détermine (S16) un plan d'exécution de fonctions (f₁, f₂, f₃) exécutables sur la base d'une séquence de messages (µ₁, µ₂, µ₃) au sein de l'arbre (12) maximal, les messages (µ₁, µ₂, µ₃) comprenant les unes ou plusieurs variables (X₁, X₂, X₃), en particulier sur la base de la une ou des plusieurs contraintes de la une ou des plusieurs variables (X₁, X₂, X₃) ou fonctions (f₁, f₂, f₃) exécutables.

11. Procédé suivant l'une quelconque des revendications 6 à 10 précédentes, dans lequel le stade de détermination de l'arbre (12) maximal comprend et/ou lance en outre le stade dans lequel :
on identifie (S17) un ou plusieurs messages (µ₁, µ₂, µ₃) sur la base de la détermination d'une ou de plusieurs arêtes correspondant à la une ou plusieurs variables (X₁, X₂, X₃) entre la une ou plusieurs fonctions (f₁, f₂, f₃) exécutables.

12. Procédé suivant l'une quelconque des revendications 6 à 11 précédentes, comprenant et/ou lançant en outre le stade dans lequel :
on met (S18) en mémoire l'arbre (12) maximal, par exemple en mettant en mémoire les uns ou plusieurs messages (µ₁, µ₂, µ₃) et/ou un ou plusieurs nœuds (n1, n2, n3) de graphe de facteur reliés par la une ou les plusieurs arêtes du modèle (11) de graphe de facteur.

13. Procédé suivant l'une quelconque des revendications précédentes, comprenant et/ou lançant en outre le stade dans lequel :
on met (S19) le modèle d'exécution dans un dossier de données, le dossier de données comprenant de l'information sur un ordre de la une ou des plusieurs fonctions (f₁, f₂, f₃) exécutables et/ou un minutage de la une ou des plusieurs fonctions (f₁, f₂, f₃) exécutables.

14. Procédé suivant l'une quelconque des revendications précédentes, comprenant et/ou lançant en outre le stade dans lequel :
on effectue, de manière répétée, n'importe lequel du un ou plusieurs des stades de procédé des revendications 1 à 13.

15. Installation de traitement de données pour concevoir et/ou configurer un système d'automatisation, l'installation fonctionnant pour effectuer l'une quelconque des revendications précédentes.

16. Produit de programme d'ordinateur, comprenant un code déchiffrable par ordinateur, qui, lorsqu'il est exécuté sur un processeur effectue n'importe laquelle des revendications 1 à 14 de procédé.
